(19) **Europäisches Patentamt**

**European Patent Office**

**Office européen des brevets**

(11) **EP 0 704 670 B1**

(12) **EUROPÄISCHE PATENTSCHRIFT**

(45) Veröffentlichungstag und Bekanntmachung des Hinweises auf die Patenterteilung:
**09.02.2000 Patentblatt 2000/06**

(51) Int Cl.$^7$: **G01B 11/06**

(21) Anmeldenummer: **95111366.1**

(22) Anmeldetag: **20.07.1995**

(54) **Vorrichtung zur berührungslosen Messung der Dicke von Messobjekten aus transparentem Material**

Device for contactless thickness measurement of objects made of transparent material

Dispositif pour la mesure sans contact de l'épaisseur d'objets en matériau transparent

(84) Benannte Vertragsstaaten:
**DE FR GB IT NL**

(30) Priorität: **29.09.1994 DE 4434822**

(43) Veröffentlichungstag der Anmeldung:
**03.04.1996 Patentblatt 1996/14**

(73) Patentinhaber:
- **Schott Glas**
  **55122 Mainz (DE)**
  Benannte Vertragsstaaten:
  **DE FR IT NL**
- **CARL-ZEISS-STIFTUNG trading as Schott Glas**
  **55122 Mainz (DE)**
  Benannte Vertragsstaaten:
  **GB**

(72) Erfinder:
- **Spengler, Stefan**
  **D-55257 Budenheim (DE)**
- **Munkes, Dieter**
  **D-55288 Partenheim (DE)**
- **Sparschuh, Georg**
  **D-55459 Aspisheim (DE)**

(56) Entgegenhaltungen:
**EP-A- 0 248 552       DE-A- 4 143 186**
**US-A- 3 523 736**

## Beschreibung

Die Erfindung betrifft eine Vorrichtung insbesondere zur berührungslosen Messung der Dicke von Meßobjekten aus transparentem Material, bei welcher zwei gegenläufige Strahlen aus einer ersten und einer zweiten Strahlungsquelle durch erste und zweite Strahlteiler zur Entkopplung der Strahlengänge der Sende- und Nachweisstrahlen und eine Umlenkeinrichtung, die aus einem Körper aus transparentem Material mit reflektierenden und brechenden Grenzflächen besteht, hindurch schräg auf die Oberfläche des Meßobjekts geführt und die an dessen Vorder- und Rückfläche jeweils reflektierten ersten und zweiten Teilstrahlenpaare wiederum durch die Umlenkeinrichtung und den ersten und zweiten Strahlteiler hindurch auf eine erste und zweite Nachweiseinrichtung gelenkt werden.

Es ist bekannt, beispielsweise aus EP 0 248 552 A1, zur Messung der Dicke von Glasplatten einen Laserstrahl schräg auf die Oberfläche der Glasplatte zu richten. Der Laserstrahl wird an der Glasoberfläche teilweise reflektiert und teilweise in das Glas hineingebrochen. Der gebrochene Teil wird an der Rückseite des Glases wiederum teilweise reflektiert. Dieser an der Rückseite reflektierte Anteil trifft dann wieder auf die Glasoberfläche und wird dort aus dem Glas herausgebrochen. Der Strahl ist bei planparalleler Vorder- und Rückseite des Glases parallel versetzt zum direkt von der Oberfläche reflektierten Teilstrahl. Der Abstand zwischen beiden Teilstrahlen ist direkt proportional zur Glasdicke, wenn der Einfallswinkel auf der Glasoberfläche und die Glasbrechzahl konstant sind.

Der notwendige schräge Einfall des Laserstrahls auf die Oberfläche des Meßobjekts wird im Stand der Technik in der Regel durch Schrägstellen des Lasers oder mittels eines oder mehrerer Spiegel oder auch eines Umlenkprismas realisiert.

Eine Vorrichtung der eingangs genannten Art ist aus der DE 41 43 186 A1 bekannt. Die in der Druckschrift beschriebene Vorrichtung arbeitet mit zwei gegenläufigen Strahlengängen, um Meßfehler, die beispielsweise von einer Verkippung des Meßobjekts herrühren können, zu kompensieren. Die bekannte Vorrichtung weist zwei Laserlichtquellen, zwei Strahlteiler, zwei Zeilensensoren und ein Umlenkprisma auf. Die gegenläufigen Strahlengänge werden dadurch erzielt, daß die oben beschriebenen optischen Bausteine in der Weise symmetrisch an dem Umlenkprisma angeordnet sind, daß die Symmetrieachse des Prismas die Symmetrieachse der gesamte Anordnung bildet.

Nachteilig an dieser Vorrichtung ist, daß jeder Meßstrahl vom Strahlaustritt bis zum Nachweis acht Glas/Luft-Grenzflächen (Strahlteiler, Umlenkprisma) passieren muß, wobei die Oberfläche des Meßobjekts noch nicht mitgerechnet ist. Dies kann zu Lasten der Meßgenauigkeit gehen, da diese Grenzflächen sehr leicht verschmutzen können, insbesondere beim Einsatz eines solchen Meßgerätes in Produktionshallen.

Des weiteren können die beiden Strahlengänge nicht parallel, sondern nur im Wechsel betrieben werden, da sonst parasitäre Reflexe, die jeweils vom einfallenden Strahl herrühren und sich nach Reflexion im Strahlteiler den nachzuweisenden Teilstrahlenpaaren überlagern können, die Messung stören würden.

Aufgabe der Erfindung ist, eine Vorrichtung der eingangs beschriebenen Art so weiterzubilden, daß selbst geringe Glasdicken schnell und mit hoher Genauigkeit bestimmbar sind.

Diese Aufgabe wird mit einer Vorrichtung mit allen Merkmalen des Patentanspruchs 1 gelöst.

Der Erfindung liegt der Gedanke zugrunde, daß die Umlenkeinrichtung, die aus einem Körper aus transparentem Material besteht, dessen brechenden und reflektierenden Grenzflächen zur Strahlumlenkung benutzt werden, so gestaltet werden kann, daß ihre Grenzflächen zugleich als erster und zweiter Strahlteiler zur Entkopplung der Strahlengänge der Sende- und Nachweisstrahlen genutzt werden können. Die erfindungsgemäße Vorrichtung kommt damit im Gegensatz zum Stand der Technik ohne Strahlteiler aus.

Es gibt viele Möglichkeiten, eine Umlenkeinrichtung der oben beschriebenen Art zu realisieren. Der Fachmann mit Kenntnissen in der geometrischen Optik ist, da die Strahlführung im wesentlichen vorgegeben ist, ohne weiteres in der Lage die für seinen Anwendungszweck geeignete Ausführungsform zu finden.

Eine geeignete Vorrichtung könnte beispielsweise ein Umlenkprisma der in der DE 41 43 186 A1 beschriebenen Art sein, welches so dimensioniert ist, daß die vom Meßobjekt rückreflektierten Strahlen nicht, wie in der Druckschrift dargestellt, aus den Seitenflächen austreten, sondern an diesen zur oberen Basisfläche hin reflektiert werden, an welcher dann auch die Nachweiseinrichtungen angeordnet sind. Die Laser müßten entsprechend direkt auf die Seitenflächen des Umlenkprismas ausgerichtet sein. Die Seitenflächen des Umlenkprismas würden bei diesem Ausführungsbeispiel, wie weiter unten noch näher erläutert wird, die Strahlteiler darstellen.

Vorzugsweise wird die Erfindung dadurch realisiert, daß die Umlenkeinrichtung durch zwei identische Prismen gebildet wird, die analog zum Stand der Technik zur Erzielung einer gegenläufigen Strahlführung symmetrisch zur Symmetrieachse der Vorrichtung angeordnet sind. Die Prismen sind so gestaltet, daß ihre der jeweiligen zuordneten Strahlungsquelle zugewandte Strahleintrittsfläche zugleich Reflexionsfläche für die von dem Meßobjekt reflektierenden Teilstrahlen des anderen Strahlengangs ist, d.h. die Teilstrahlen werden durch diese Grenzfläche in Richtung auf die zugeordneten Nachweiseinrichtung reflektiert. Diese Grenzfläche ist damit nicht nur Teil der Strahlumlenkung, sondern wirkt auch noch zugleich als Strahlteiler.

Nachfolgend wird die Erfindung anhand der Figuren näher erläutert.

Es zeigen:

Figur 1:     in schematischer Darstellung die Gesamtanordnung eines nach der Erfindung arbeitenden Meßgeräts;

Figur 2:     in einer Prinzipskizze den Strahlengang des von der Strahlungsquelle einfallenden Strahls im Prisma; und

Figur 3:     analog zu Fig. 2 den Strahlengang der reflektierten Teilstrahlen im Prisma.

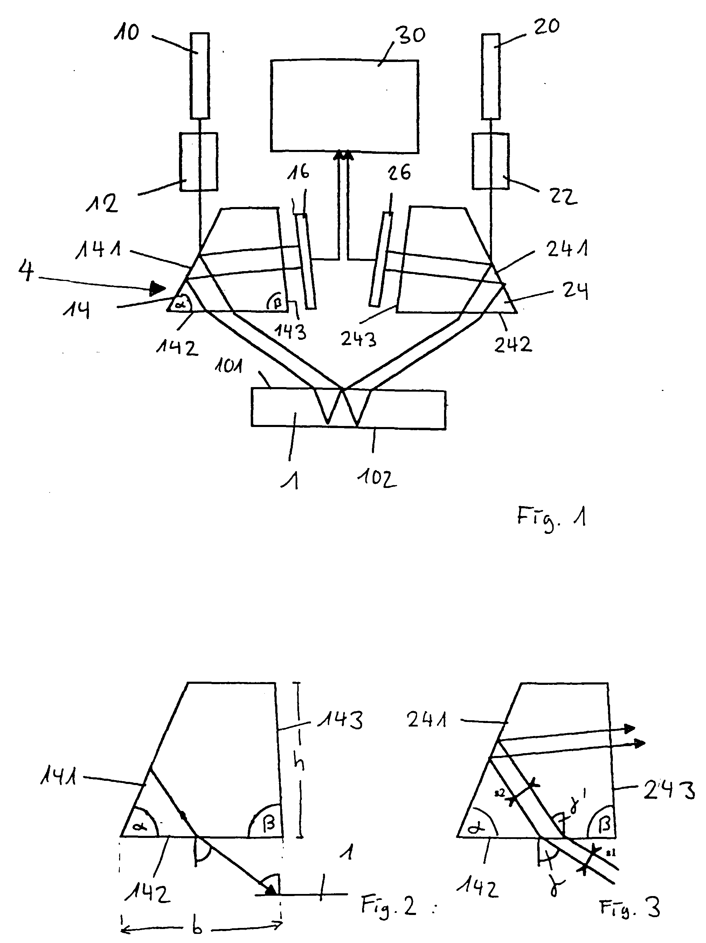

Man erkennt in Fig. 1 in schematischer Darstellung eine bevorzugte Ausführungsform für eine Gesamtanordnung eines Meßgerätes nach der Erfindung. In Fig. 1 ist mit dem Bezugszeichen 1 das Meßobjekt, beispielsweise eine Glasplatte, deren Dicke, oder eine Glasröhre, deren Wandstärke bestimmt werden soll, bezeichnet. 10 und 20 bezeichnen die erste und die zweite Strahlungsquelle, hier Laser, 12 und 22 Strahlumformer, die die Aufgabe haben, der Strahlquerschnittsfläche eine gewünschte Form zu geben und gegebenenfalls die Polarisationsrichtung der Strahlen zu ändern. Die Umlenkeinrichtung ist mit 4 bezeichnet. Sie besteht in der vorliegenden Ausführungsform aus den beiden Prismen 14 und 24, die erfindungsgemäß die strahlteilenden Flächen zur Entkopplung der Strahlengänge der Sende- und Nachweisstrahlen enthalten. 16 und 26 bezeichnen die zugeordneten Nachweiseinrichtungen für die reflektierten Teilstrahlen, in der Figur Zeilensensoren. Von den Zeilensensoren 16 und 26 aus gelangen die Meßsignale zur Auswertung zu einer Auswerteelektronik 30.

Die Gesamtanordnung ist spiegelsymmetrisch zu einer in der Papierebene, zwischen den beiden Teilprismen 14 und 24 verlaufenden Symmetrieachse. Dies resultiert aus der Forderung nach einer gegenläufigen Strahlführung, die, wie es schon aus der DE 41 43 186 A1 bekannt ist, Meßfehler, die von einer Verkippung des Meßobjektes herrühren, kompensieren sollen. Dieses Meßprinzip ist in der DE 41 43 186 A1 ausführlich beschrieben.

Im Betrieb fallen Strahlen von den Laserlichtquellen 10 und 20, nachdem sie die Strahlumformungen 12 und 22 durchlaufen haben, auf die Außenflächen 141 bzw. 241 der Teilprismen 14 und 24. An diesen Grenzflächen wird ein Teil der Strahlung reflektiert, der größere Teil wird gebrochen und tritt in das jeweilige Prisma ein. An der Grenzfläche 142 bzw. 242 des Prismas wird der Strahl wiederum zum Teil reflektiert und zum Teil gebrochen, wobei der gebrochene Teil des Strahls aus dem Prisma austritt und auf das Meßobjekt fällt. Vorzugsweise ist das Prisma so gestaltet, daß der reflektierte Teilstrahl, wie weiter unten noch erläutert wird, im Prisma verbleibt und nicht als parasitärer Reflex auftritt.

Der Strahlengang im Prisma auf dem Hinweg zum Meßobjekt ist in der Prinzipskizze in Figur 1 zur Verdeutlichung noch einmal ohne die vom Meßobjekt zurückreflektierten gegenläufigen Teilstrahlen des anderen Strahlengangs dargestellt. Figur 1 zeigt ebenso wie Figur 3 nur das in Fig. 1 auf der linken Seite angeordnete Prisma 14, aufgrund der Symmetrie der Anordnung ist der Strahlengang jedoch in beiden Prismen identisch.

In Figur 3 ist der Strahlengang der rückreflektierten Teilstrahlen im Prisma dargestellt. Die von an der Vorder- und Rückfläche (101,102) des Meßobjekts 1 reflektierten Teilstrahlen treten durch die Fläche 142 in das Prisma 14 ein - ein Teil wird wiederum reflektiert -, werden gebrochen und nach Durchlaufen des Prismas 14 an dessen Fläche 141 in Richtung auf die Fläche 143 reflektiert. An der Fläche 143 tritt das Strahlenpaar aus und gelangt auf den Zeilensensor 16. Über die an den Zeilensensor 16 angeschlossene Auswerteelektronik (30) werden die Meßsignale ausgewertet und in Abstandswerte umgesetzt.

Die Auswertung der Meßsignale ist Stand der Technik und beispielsweise in EP 0 248 552 A1 beschrieben. Die Auswertung erfolgt im wesentlichen über die Gleichung:

$$T = s \cdot \frac{\sqrt{n^2 - \sin^2 \gamma}}{\sin (2\gamma)}$$

wobei s der Abstand zwischen den Teilstrahlen eines Strahlenpaars, n die Brechzahl des Glases des Meßobjekts, T die Dicke des Meßobjekts und $\gamma$ der Einfallswinkel der reflektierten Strahlenpaare auf das Meßobjekt darstellen. Gegebenenfalls kann es in Abhängigkeit von der verwendeten Auswerteelektronik erforderlich sein, in die Auswertegleichung noch Korrekturfaktoren einzusetzen.

Das Auffinden einer geeigneten Auswerteelektronik ist dem Fachmann geläufig. Diese ist nicht Gegenstand der Erfindung.

Als Nachweiseinrichtungen sind z. B. positionsempfindliche Photodioden oder Dioden-Zeilensensoren geeignet.

Vorzugsweise werden Zeilensensoren eingesetzt, da diese robust, hochauflösend, kompakt, geometrisch stabil, kostengünstig und einfach auszuwerten sind.

Man erkennt in den Figuren 1 bis 3, daß die Außenflächen 141, 241 der Prismen 14 und 24 nicht nur der Strahlumlenkung, sondern erfindungsgemäß auch der Strahlteilung dienen: die von den Strahlungsquellen 10 bzw. 20 auftreffenden Strahlen werden an den Außenflächen 141, 241 in die zugeordneten Prismen 14, 24 hineingebrochen, andererseits werden die rückreflektierten Teilstrahlenpaare an den Flächen 141 bzw. 241 in Richtung auf den Zeilensensor reflektiert, d.h. die Flächen 141, 241 haben Strahlteilereigenschaft. Hierzu genügt es, daß sie für die Strahlung teildurchlässig sind. Dies ist in der Regel bei allen Grenzflächen von Luft zu einem Körper aus einem für die betreffende Strahlung transparenten Material der Fall.

Die Notwendigkeit einer Strahlteilung rührt von der Gegenläufigkeit der Strahlengänge her: Die von dem Meßobjekt rückreflektierten Strahlen, die zum Teil den von der anderen Strahlungsquelle stammenden, auf das Meßobjekt hinlaufenden Strahlen überlagert sind, müssen von diesen entkoppelt und in Richtung auf die Nachweiseinrichtung umgelenkt werden. In DE 41 43 186 A1 sind hierfür separate optische Bausteine, nämlich sog. Strahlteiler vorgesehen. Nach der vorliegenden Erfindung sind diese nicht erforderlich, was zu den weiter oben beschriebenen Vorteilen führt.

Die Dimensionierung der Prismen 14, 24 hängt im wesentlichen vom Anwendungsfall ab. Der Fachmann kann in einfacher Weise die für seinen Anwendungsfall günstigsten Abmessungen auffinden. Er muß hierfür lediglich die Grundlagen der geometrischen Optik beherrschen und beachten, daß der in Fig. 1 skizzierte Strahlengang im wesentlichen erreicht wird. Die Vorgehensweise bei der Dimensionierung der Prismen ist in der Regel so, daß der Fachmann die Abmessungen so wählt, daß der Auftreffwinkel $\gamma$ des hinlaufenden Strahles auf die Oberfläche des Meßobjekts etwa zwischen 20 und 70° liegt. Dies stellt einen Kompromiß zwischen möglichst großem Strahlabstand der rückreflektierten Teilstrahlen einerseits und Begrenzung der Querausdehnung des Meßbereichs im Meßobjekt, die sich insbesondere bei dicken Objekten bemerkbar macht, dar. Darüber hinaus kann die Geometrie der Prismen 14 und 24 so gewählt werden, in einfacher Weise durch Einstellen eines entsprechenden Winkels $\beta$ bei sonst vorgegebenen Dimensionen, daß parasitäre Reflexe, die beispielsweise durch an den den Meßobjekten zugewandten Basisflächen der Prismen reflektierten Strahlen des hinlaufenden Strahles entstehen, durch Totalreflexion an den Seitenwänden (143, 243) im Prisma verbleiben. Andernfalls würden diese Reflexe auf die Zeilensensoren auftreffen und zusätzliche Signale generieren, die die Auswertung erschweren und das Signal/Rausch-Verhältnis verschlechtern.

Neben der höheren Meßgenauigkeit hat das Ausschalten dieser parasitären Reflexe noch den Vorteil, daß im Gegensatz zur Vorrichtung der DE 41 43 186 A1 beide Kanäle gleichzeitig betrieben werden können. Die eingangs beschriebenen Kanalbeeinflussung bei der bekannten Vorrichtung tritt bei der erfindungsgemäßen Vorrichtung nicht auf.

Vorteilhafterweise werden die vom Meßobjekt reflektierten Teilstrahlenpaare nach Reflexion an den Grenzflächen 141, 214 in den Prismen 14 und 24 senkrecht auf die Flächen 143, 243 geführt. Dies geschieht der Einfachheit halber auch bevorzugt über Anpassung des Winkels $\beta$ der Prismen. Bei senkrechtem Durchtritt durch die Flächen 143, 243 wirkt das Prisma, wie man in Fig. 3 erkennen kann, als anamorphotisches Aufweitungssystem, d.h. der Abstand s der beiden an der Vorder- und Rückfläche des Meßobjekts reflektierten Teilstrahlen wird durch das Prisma vergrößert. Da die Teilstrahlen nach Austritt aus den Prismen direkt zu den Nachweiseinrichtungen, z. B. Zeilensensoren, gelangen, bleibt dieser vergrößerte Abstand bei der Erfassung der Meßsignale erhalten. Der Vergrößerungsfaktor V ergibt sich aus Fig. 3 zu:

$$V = \frac{s_2}{s_1} = \frac{\cos \gamma'}{\cos \gamma}$$

Der Vorteil liegt darin, daß bei kleinen Dicken sich ohne Aufweitung überlappende Intensitätsverteilungen von Vorder- und Rückseitenreflexen wieder getrennt werden. Damit können Gläser mit geringer Dicke noch vermessen werden, die ohne Aufweitung bereits nicht mehr meßbar wären.

In einer bevorzugten Ausführungsform der Erfindung sind die Zeilensensoren direkt auf die Grenzflächen 143, 243 der Prismen 14, 24 aufgekittet. Vorzugsweise wird zwischen diesen Grenzflächen und den Zeilensensoren noch ein Absorptions- oder Interferenzfilter, insbesondere aus einem dielektrischen Schichtsystem bestehend, das die aus der Umgebung auftreffende Strahlung ausschalten soll, angeordnet, z. B. zwischen beiden Teilen eingekittet. Besonders bewährt hat sich die Verwendung eines Farbglasfilters RG 645, das die kurzwellige Strahlung bis 645 nm unterdrückt. Damit sind alle Glasoberflächen optisch inaktiviert, können nicht verschmutzen und es müssen keine besonderen Anforderungen an Planität und Polierqualität gestellt werden.

Mit einer Strahlteilerbeschichtung auf den Flächen 141, 241, welche das Verhältnis von reflektiertem zu transmittiertem Strahl etwa auf 1 : 1 setzt, können hohe Intensitäten bei den nachzuweisenden Teilstrahlen erzielt werden. Eine Antireflexbeschichtung auf den Flächen 143, 243 verhindert in der Regel weitgehend die Ausbildung der oben beschriebenen parasitären Reflexe.

Unter Berücksichtigung des oben gesagten wurden bevorzugte Materialien und bevorzugte Abmessungen für die Teilprismen ermittelt, die, ebenso wie der damit erzielbare Winkel $\gamma$, der nachfolgenden Tabelle zu entnehmen sind:

| Winkel γ | Winkel α | Winkel β | h | b | Glasart |
|---|---|---|---|---|---|
| 49° | 61,17° | 85,70° | 65 mm | 60 mm | BaF 52 |
| 30° | 55,40° | 90° | 60 mm | 68 mm | FK 54 |
| 25° | 48,70° | 100° | 60 mm | 65 mm | FK 54 |

Der Winkel γ bezeichnet in der obigen Tabelle den Winkel zwischen dem aus dem Prisma 14,24 in Richtung auf das Meßobjekt 1 hin austretenden Strahl und der Flächennormalen der entsprechenden Flächen 142, 242 bzw. zwischen der Flächennormalen des Meßobjekts und dem hinlaufenden Strahl.

Große Winkel γ eignet sich vor allem für die Messung geringer Glasdicken, wobei geringere Arbeitsabstände in Kauf genommen werden.

Kleine Winkel γ sind vorteilhaft bei der Messung größerer Glasdicken und wenn große Arbeitsabstände gewünscht sind. Der Winkel γ - und damit der Winkel α des Prismas - ist genauigkeitsbestimmend. Der Winkel β ist hingegen relativ unkritsch, da bei einer Abweichung vom senkrechten Durchtritt durch die Flächen 143, 243 ± 1° sich der die Brechung bestimmende Sinus des Winkels nur um 0,01 % ändert und damit nach dem Brechungsgesetz nur eine sehr geringe Strahlablenkung erfolgt.

Die Vorteile der erfindungsgemäßen Vorrichtung lassen sich wie folgt zusammenfassen:

Das Zusammenfassen von mehreren Funktionen in einem Bauteil, nämlich der Strahlteilung und -umlenkung in einem Prisma, macht die erfindungsgemäße Vorrichtung kompakt und billig in der Fertigung. Separate Strahlteiler werden nicht benötigt. Weiterhin kommt die erfindungsgemäße Vorrichtung mit wenigen oder gar keinen dielektrischen Beschichtungen aus. Im Gegensatz zur Lösung gemäß DE 41 43 186 A1, bei der 8 Glas/Luft-Grenzflächen (ohne Objekt) überwunden und entspiegelt werden müssen, sind bei der in Fig. 1 dargestellten Ausführungsform der Erfindung nur 4 Glas/Luft-Grenzflächen zu berücksichtigen.

Die Winkel der Prismen können außerdem so gewählt werden, daß parasitäre Reflexe, die trotz einer Entspiegelung der Oberflächen nicht auszuschließen sind, die Messung im jeweilig anderen Kanal nicht stören können. Somit ist es möglich beide Kanäle parallel gleichzeitig auszuwerten, was die Meßrate erhöht.

Die erfindungsgemäße Vorrichtung zeichnet sich durch eine einfache Justierung aus, da nur die beiden optischen Achsen der Laser untereinander parallel und senkrecht zur Gerätevorderkante, die auch Referenzkante für die Prismen ist, ausgerichtet werden müssen. Ist der Winkel α der Prismen sehr genau gefertigt, kann man davon ausgehen, daß die Einstrahlwinkel auf das Meßobjekt für beide Kanäle automatisch gleich sind, wenn die Prismen mit den Flächen 142, 242 an der Referenzkante anliegen.

Die erfindungsgemäße Vorrichtung eignet sich für verschiedene Anwendungen: neben der Dickenmessung bei Flachglas ist insbesondere die Wandstärkenmessung bei Rohrglas von Interesse. Bei dünnen Röhrchen bzw. entsprechender Dimensionierung der erfindungsgemäßen Vorrichtung können sowohl die Wandstärken als auch die Außen- und Innendurchmesser bestimmt werden. Hierbei erhält man 2 zueinander beabstandete Reflexpaare, die der Reflexion der Strahlen an der vorderen und der hinteren Wand des Röhrchens entsprechen. Der Außendurchmesser entspricht dem Abstand zwischen dem ersten und dem vierten Reflex (bezogen auf den Nullpunkt der Meßskala), der Innendurchmesser dem Abstand zwischen dem zweiten und dritten Reflex. Weiterhin sind Abstands- und Planitätsmessungen auch bei nicht transparenten, im wesentlichen gerichtet reflektierenden Körpern denkbar, bei welchen der Abstand des ersten Reflexes zu einem Bezugspunkt auf der Meßskala von Bedeutung ist.

**Patentansprüche**

1. Vorrichtung zur berührungslosen Messung von Abständen zu reflektierenden Grenzflächen eines Meßobjekts (1) oder Abstandsdifferenzen zwischen solchen, insbesondere zur Bestimmung der Dicke von Meßobjekten aus transparentem Material, mit

   - zwei Strahlungsquellen (10, 20) zur Erzeugung zweier Sendestrahlen,
   - zwei strahlteilenden Flächen (141, 241) zur Entkopplung der Strahlengänge der von der Strahlungsquelle zum Meßobjekt (1) hin verlaufenden Sendestrahlen und der gegenläufigen, vom Meßobjekt zur Nachweiseinrichtung hin verlaufenden reflektierten Strahlen
   - einer Strahlumlenkeinrichtung (4) aus transparentem Material mit reflektierenden und brechenden Randflächen (141, 142, 143, 241, 242, 243), und
   - zwei ortsauflösenden Nachweiseinrichtungen (16, 26),

wobei die beiden Sendestrahlen über je eine der strahlteilenden Flächen (141, 241) und die Strahlumlenkeinrichtung (4) zueinander symmetrisch verlaufend in Richtung des Meßobjekts (1) gelenkt werden, um schräg auf dessen Vorderseite zu treffen, und die von dem Meßobjekt (1) reflektierten Strahlen gegenläufig zu den Sendestrahlen über die Strahlumlenkeinrichtung (4) zu den strahlteilenden Flächen und über diese von den gegenläufigen Sendestrahlen entkoppelt zur jeweiligen Nachweiseinrichtung (16, 26) gelangen

**dadurch gekennzeichnet,**

daß die die Sende- und die reflektierten Strahlen entkoppelnden strahlteilenden Flächen mit den jeweils den Strahlungsquellen (10,20) zugewandten Strahleintrittsflächen (141, 241) der Strahlumlenkeinrichtung (4) zusammenfallen.

2. Vorrichtung nach Anspruch 1,
**dadurch gekennzeichnet,**
daß die Strahlumlenkeinrichtung (4) aus zwei zueinander symmetrisch angeordneten Prismen (14, 24) besteht.

3. Vorrichtung nach Anspruch 2,
**dadurch gekennzeichnet,**
daß die jeweils den Strahlungsquellen (10, 20) zugewandten Strahleintrittsflächen (141, 241) der Prismen (14, 24) mit einer strahlteilenden Beschichtung und die dem Meßobjekt (1) zugewandten Flächen (142, 242) mit einer Entspiegelungsbeschichtung versehen sind.

4. Vorrichtung nach Anspruch 2 oder 3,
**dadurch gekennzeichnet,**
daß die Prismen (14, 24) so dimensioniert sind, daß der Austrittswinkel (γ) des aus einem Prisma in Richtung auf das Meßobjekt (1) hin austretenden Strahls zwischen 20° und 70° beträgt.

5. Vorrichtung nach wenigstens einem der Ansprüche 2 bis 4,
**dadurch gekennzeichnet,**
daß der Winkel (β) der Prismen (14, 24) zwischen den jeweils dem Meßobjekt (1) zugewandten Flächen (142, 242) und den den Nachweiseinrichtungen (16, 26) zugewandten Austrittsflächen (143, 243) so gewählt ist, daß die dorthin reflektierten Strahlen beim Austreten aus den Prismen senkrecht auf die entsprechenden Austrittsflächen (143, 243) auftreffen.

6. Vorrichtung nach einem der Ansprüche 2 bis 5,
**dadurch gekennzeichnet,**
daß der Winkel (β) der Prismen (14, 24) zwischen den jeweils dem Meßobjekt (1) zugewandten Flächen (142, 242) und den den Nachweiseinrichtungen (16, 26) zugewandten Austrittsflächen (143, 243) so gewählt ist, daß parasitäre Strahlen innerhalb der Prismen (14, 24) totalreflektiert werden.

7. Vorrichtung nach wenigstens einem der Ansprüche 2 bis 6,
**dadurch gekennzeichnet,**
daß die Nachweiseinrichtungen (16, 26) Zeilensensoren sind, die auf die ihnen zugewandten Austrittsflächen (143, 243) der Prismen (14, 24) aufgekittet sind.

8. Vorrichtung nach einem der Ansprüche 2 bis 7,
**dadurch gekennzeichnet,**
daß zwischen den Nachweiseinrichtungen (16, 26) und den ihnen zugewandten Austrittsflächen (143, 243) der Prismen (14, 24) Absorptions- oder Interferenzfilter angeordnet sind.

9. Vorrichtung nach einem der Ansprüche 2 bis 8,
**dadurch gekennzeichnet,**
daß die Prismen (14) und (24) die in der nachfolgenden Tabelle für verschiedene Glasarten angeführten Abmessungen aufweisen:

| Winkel α | Winkel β | h | b | Glasart |
|---|---|---|---|---|
| 61,17° | 85,70° | 65 mm | 60 mm | BaF 52 |
| 55,40° | 90° | 60 mm | 68 mm | FK 54 |
| 48,70° | 100° | 60 mm | 65 mm | FK 54 |

worin bedeuten:

b: Länge der dem Meßobjekt zugewandten Prismengrundfläche
h: Höhe des Prismas über seiner Grundfläche
α: Winkel zwischen der Grundfläche und der der Strahlungsquelle zugewandten Strahleintrittsfläche, und
β: Winkel zwischen der Grundfläche und der der Nachweiseinrichtung zugewandten Austrittsfläche

## Claims

1. Device for contactless measurement of distances from reflecting boundary surfaces of an item under test (1), or differences in distance between such items, in particular for determining the thickness of items under test made from transparent material, having

   - two radiating sources (10, 20) for generating two transmitted beams,
   - two beam-splitting surfaces (141, 241) for decoupling the beam paths of the transmitted beams running from the radiating source towards the item under test (1) and the oppositely directed reflected beams running from the item under test towards the detecting device,
   - a beam deflecting device (4) made from transparent material with reflecting and refracting edge surfaces (141, 142, 143, 241, 242, 243), and
   - two spatially resolving detecting devices (16, 26),

   in which the two transmitted beams are directed, running symmetrically relative to one another via in each case one of the beam-splitting surfaces (141, 241) and the beam deflecting device (4), in the direction of the item under test (1), in order to strike the front side thereof obliquely, and the beams reflected from the item under test (1) pass, in a fashion oppositely directed to the transmitted beams, via the beam deflecting device (4) to the beam-splitting surfaces and via the latter, in a fashion decoupled from the oppositely directed transmitted beams, to the respective detecting device (16, 26), characterized in that the beam-splitting surfaces decoupling the transmitted beams and the reflected beams coincide with the beam entrance surfaces (141, 241), respectively facing the radiating sources (10, 20), of the beam deflecting device (4).

2. Device according to Claim 1, characterized in that the beam deflecting device (4) comprises two prisms (14, 24) arranged symmetrically relative to one another.

3. Device according to Claim 2, characterized in that the beam entrance surfaces (141, 241), respectively facing the radiating sources (10, 20), of the prisms (14, 24) are provided with a beam-splitting coating, and the surfaces (142, 242) facing the item under test (1) are provided with an antireflection coating.

4. Device according to Claim 2 or 3, characterized in that the prisms (14, 24) are dimensioned such that the emergence angle (γ) of the beam emerging from a prism in the direction of the item under test (1) is between 20° and 70°.

5. Device according to at least one of Claims 2 to 4, characterized in that the angle (β) of the prisms (14, 24) between the surfaces (142, 242) respectively facing the item under test (1) and the exit surfaces (143, 243) facing the detecting devices (16, 26) is selected such that upon exiting from the prisms the beams reflected in that direction strike the corresponding exit surfaces (143, 243) perpendicularly.

6. Device according to one of Claims 2 to 5, characterized in that the angle (β) of the prisms (14, 24) between the surfaces (142, 242) respectively facing the item under test (1) and the exit surfaces (143, 243) facing the detecting devices (16, 26) is selected such that parasitic beams are totally reflected inside the prisms (14, 24).

7. Device according to at least one of Claims 2 to 6, characterized in that the detecting devices (16, 26) are line sensors which are cemented onto the exit surfaces (143, 243), facing them, of the prisms (14, 24).

8. Device according to one of Claims 2 to 7, characterized in that absorption or interference filters are arranged between the detecting devices (16, 26) and the exit surfaces (143, 243), facing them, of the prisms (14, 24).

9. Device according to one of Claims 2 to 8, characterized in that the prisms (14) and (24) have the dimensions set forth in the following table for different types of glass:

| Angle α | Angle β | h | b | Type of glass |
|---------|---------|-------|-------|---------------|
| 61.17° | 85.70° | 65 mm | 60 mm | BaF 52 |
| 55.40° | 90° | 60 mm | 68 mm | FK 54 |
| 48.70° | 100° | 60 mm | 65 mm | FK 54 |

wherein:

b:    denotes the length of the prism base surface facing the item under test,

h:    denotes the height of the prism above its base surface,

α:    denotes the angle between the base surface and the beam entrance surface facing the radiating source, and

β:    denotes the angle between the base surface and the exit surface facing the detecting device.

**Revendications**

1.  Dispositif pour la mesure sans contact de distances à des surfaces extérieures réfléchissantes d'un objet de mesure (1) ou de différences de distance entre de telles surfaces, en particulier pour la détermination de l'épaisseur d'objets de mesure en matériau transparent, avec

    - deux sources de rayonnement (10, 20) pour la production de deux faisceaux émis,
    - deux surfaces de séparation de faisceau (141, 241) pour le découplage des trajets des faisceaux émis allant de la source de rayonnement jusqu'à l'objet de mesure (1) et des faisceaux réfléchis allant en sens contraire de l'objet de mesure jusqu'au dispositif de détection,
    - un dispositif de déviation des faisceaux (4) en matériau transparent avec des faces latérales réfléchissantes et réfringentes (141, 142, 143, 241, 242, 243), et
    - deux dispositifs de détection de position (16, 26),

    dans lequel les deux faisceaux émis sont déviés chacun par une des surfaces de séparation de faisceau (141, 241) et en parcourant le dispositif de déviation (4) de façon symétrique l'un par rapport à l'autre en direction de l'objet de mesure (1), afin de tomber obliquement sur la face avant de celui-ci, et les faisceaux réfléchis par l'objet de mesure (1) en sens contraire par rapport aux faisceaux émis parviennent, par le dispositif de déviation des faisceaux (4), jusqu'aux surfaces de séparation de faisceau et, découplés par celles-ci des faisceaux émis de sens contraire, jusqu'au dispositif de détection respectif (16, 26),
    caractérisé en ce que les surfaces de séparation de faisceau, qui découplent les faisceaux émis et les faisceaux réfléchis, coïncident avec les faces d'entrée (141, 241) des faisceaux du dispositif de déviation des faisceaux (4) tournées vers les sources de rayonnement (10, 20) respectives.

2.  Dispositif suivant la revendication 1, caractérisé en ce que le dispositif de déviation des faisceaux (4) se compose de deux prismes (14, 24) disposés symétriquement l'un par rapport à l'autre.

3.  Dispositif suivant la revendication 2, caractérisé en ce que les faces d'entrée (141, 241) des prismes (14, 24) tournées respectivement vers les sources de rayonnement (10, 20) sont pourvues d'un revêtement séparateur de faisceau et les faces (142, 242) tournées vers l'objet de mesure (1) d'un revêtement antireflet.

4.  Dispositif suivant la revendication 2 ou 3, caractérisé en ce que les prismes (14, 24) sont dimensionnés d'une façon telle que l'angle de sortie (γ) du faisceau sortant d'un prisme en direction de l'objet de mesure (1) est compris entre 20° et 70°.

5.  Dispositif suivant au moins l'une des revendications 2 à 4, caractérisé en ce que l'angle (β) des prismes (14, 24) entre les faces (142, 242) respectivement tournées vers l'objet de mesure (1) et les faces de sortie (143, 243) tournées vers les dispositifs de détection (16, 26) est choisi de telle façon que les faisceaux réfléchis vers cet endroit arrivent perpendiculairement sur les faces de sortie correspondantes (143, 243) lors de la sortie hors des prismes.

6.  Dispositif suivant l'une quelconque des revendications 2 à 5, caractérisé en ce que l'angle (β) des prismes (14, 24) entre les faces (142, 242) respectivement tournées vers l'objet de mesure (1) et les faces de sortie (143, 243) tournées vers les dispositifs de détection (16, 26) est choisi de telle façon que des faisceaux parasites soient totalement réfléchis à l'intérieur des prismes (14, 24).

7.  Dispositif suivant au moins l'une des revendications 2 à 6, caractérisé en ce que les dispositifs de détection (16, 26) sont des détecteurs de lignes, qui sont collés sur les faces de sortie (143, 243) des prismes (14, 24) qui leur font face.

8.  Dispositif suivant l'une quelconque des revendications 2 à 7, caractérisé en ce que des filtres d'absorption ou d'interférence sont disposés entre les dispositifs de détection (16, 26) et les faces de sortie (143, 243) des prismes (14, 24) qui leur font face.

9.  Dispositif suivant l'une quelconque des revendications 2 à 8, caractérisé en ce que les prismes (14) et (24) présentent les dimensions indiquées dans le tableau suivant pour différents types de verre:

| angle $\alpha$ | angle $\beta$ | h | b | type de verre |
|---|---|---|---|---|
| 61,17° | 85,70° | 65 mm | 60 mm | BaF 52 |
| 55,40° | 90° | 60 mm | 68 mm | FK 54 |
| 48,70° | 100° | 60 mm | 65 mm | FK 54 |

dans lequel:

b :   longueur de la base du prisme tournée vers l'objet de mesure
h :   hauteur du prisme au-dessus de sa base
$\alpha$:   angle entre la base et la face d'entrée du faisceau tournée vers la source de rayonnement
$\beta$:   angle entre la base et la face de sortie tournée vers le dispositif de détection

Fig. 1

Fig. 2 :

Fig. 3